# EUROPEAN PATENT SPECIFICATION

(11) **EP 2 975 216 B1**
(45) Date of publication and mention of the grant of the patent: **14.08.2019**
(21) Application number: 14764614.5
(22) Date of filing: 12.03.2014
(51) Int. Cl.: F01D 5/18, F01D 9/02, F02C 7/18

(54) **COOLING PROMOTING STRUCTURE**
KÜHLUNGSFÖRDERUNGSSTRUKTUR
STRUCTURE FAVORISANT LE REFROIDISSEMENT

(30) Priority: 14.03.2013 JP 2013052422
(43) Date of publication of application: 20.01.2016
(73) Proprietor: IHI Corporation, Tokyo 135-8710 (JP)
(72) Inventor: FUJIMOTO Shu, Tokyo 135-8710 (JP); NAKAMATA Chiyuki, Tokyo 135-8710 (JP); OKITA Yoji, Tokyo 135-8710 (JP)
(74) Representative: Carpmael, Robert Maurice Charles
(86) International application number: PCT/JP2014/056528
(87) International publication number: WO 2014/142184

(56) References cited:
- WO-A1-2013/077761
- JP-A- H1 089 006
- JP-A- 2009 221 995
- US-A- 4 407 632
- US-A- 4 407 632
- US-A1- 2007 172 354
- US-A1- 2011 052 413
- US-B1- 7 544 044
- US-B1- 7 544 044

## Description

### Technical Field

The present disclosure relates to a cooling promoting structure.

Priority is claimed on Japanese Patent Application No. 2013-052422, filed on March 14, 2013.

### Background Art

For example, in a turbine blade or the like which is exposed to high-temperature atmosphere, a cooling promoting structure configured to effectively prevent an increase in a temperature of the turbine blade is incorporated. Patent Document 1 discloses a cooling promoting structure, in which a plurality of partition plates are provided in an inner portion of a hollow turbine blade, to which cooling air is supplied, at equal intervals in a height direction of a blade, and a lattice structure is formed between the partition plates. In addition, in the descriptions below, "height" indicates a dimension in the height direction of the blade, that is, a dimension in a direction perpendicular to a rotary shaft of an engine.

In the cooling promoting structure disclosed in Patent Document 1, the cooling air flowing to a pressure surface side of a space formed between the partition plates collides with the partition plates and is extracted from a hole portion of the lattice structure. Accordingly, the cooling air flows into a suction surface side of the space. In addition, the cooling air flowing to a suction surface side of the space collides with the partition plates and is extracted from a different hole portion. Accordingly, the cooling air flows into the pressure surface side of the space. According to the cooling promoting structure, when the cooling air flowing along the pressure surface collides with the partition plates and a flow direction of the cooling air is changed so that the cooling air flows into the suction surface, the cooling air collides with a blade wall of the suction surface side of the space and the blade wall is impinge cooled. Accordingly, the cooling effectiveness is increased.

Patent Document 2 discloses a wall enclosing a hot gas path, the wall including a cooling cavity formed between an inner wall and an outer wall, and a plurality of pins extending between walls with a plurality of turbulators within the cooling passage to promote turbulence within the cooling air flow. The turbulators form a zigzag arrangement. The turbulators are angled at about 45 degrees or about 60 degrees from the cooling air flow path. Patent Document 3 discloses the trailing edge region of airfoil including a slot formed between the pressure and suction side walls with an array of pedestals extending across the slot, wherein selected pairs of pedestals are connected by a barrier wall adjacent either the pressure or suction side of the slot.

Patent Document 4 relates to an airfoil, wherein cooling passages are provided inside the airfoil, wherein each radial cross section of said airfoil has a specific profile, wherein hot gas is flowing along said airfoil's surface from a leading edge to a trailing edge of said profile, wherein said trailing edge is provided with cooling fluid discharge exits, wherein said pressure- side and said suction- side are respectively defined by a wall comprising an inner surface and an outer surface, which inner surface is provided with ribs extending in a rib
direction inclined to said radial direction, wherein along a portion of at least 10% of said profile's lengths said inclined ribs of said inner surface of said pressure - side and said suction- side contact each other at respective cross- contact-points / wherein said cross - contact -points form a 2 - dimensional matrix.

### Prior Art document

### Patent Document

[Patent Document 1] Japanese Unexamined Patent Application, First Publication No. 2008-64002
[Patent Document 2] US 7544 044 B1
[Patent Document 3] US 4 407 632 A
[Patent Document 4] WO 2013/077761 A1

### Summary

### Technical Problem

In general, a turbine blade is made of cast metal. Accordingly, in order to form a cooling promoting structure which is an internal structure of the turbine blade, it is necessary to use a core corresponding to the cooling promoting structure. Since a lattice structure is a complicated structure, the core is also complicated, and it is difficult to maintain the strength of the core. Accordingly, manufacturing of the core needs to be performed carefully.

In the cooling promoting structure disclosed in Patent Document 1, there are excellent effects in that the cooling effectiveness increases. However, it is not easy to manufacture the cooling promoting structure. This is because a plurality of partition plates are provided, the core which corresponds to a lattice structure and has low strength is formed in a comb shape since the core requires a gap corresponding to the partition plate, and it is not easy to maintain the strength of the core.

In addition, in a case where the cooling promoting structure is applied to a structure other than the turbine blade and the structure is made of cast metal, similarly, it is not easy to ensure the strength of the core, and it is difficult to manufacture the structure.

The disclosure is made in consideration of the above-described circumstances, and an object thereof is to provide a cooling promoting structure capable of increasing cooling effectiveness of impingement cooling and enhancing the manufacturability of a product where the cooling promoting structure is used.

### Solution to Problem

According to a first aspect of the disclosure, there is provided a cooling promoting structure as defined in appended claim 1. It is provided in a cooling flow path which is formed between a first member and a second member disposed to face each other, including a plurality of first flow path walls which are erected on the first member at equal intervals in a front-rear direction of the first member and form first flow paths on the first member side of the cooling flow path, and a plurality of second flow path walls which are erected on the second member at equal intervals in a front-rear direction of the second member and form second flow paths on the second member side of the cooling flow path, in which each of the first flow path walls includes a first collision surface which collides with cooling gas flowing through the first flow path at locations where the first flow path is bent and at which the cooling air X flows from the first flow path into the second flow path, each of the second flow path walls includes a second collision surface which collides with cooling gas flowing through the second flow path at locations where the second flow path is bent and at which the cooling air X flows from the second flow path into the first flow path,
the distance in the thickness direction of the first flow path wall of the first collision surface from the first member is set so as to be the same as the distance in the thickness direction of the second flow path wall the second collision surface from the second member such that a boundary between the first flow path wall and the second flow path wall becomes a flat surface except for the connection location between the first flow path and the second flow path,
each of the first flow path walls is formed in a wave form in which bending is repeated at a constant period,
each of the second flow path walls is formed in a wave form in which bending is repeated at the same constant period of the wave form formed by the first flow path walls, and
a phase of the wave form formed by the second flow path walls is shifted 180° to a phase of the wave form formed by the first flow path wall.

According to a second aspect of the disclosure, in the first aspect or the second aspect, the first flow path wall, the second flow path wall, the first flow path, and the second flow path have a mirror symmetrical shape having a center about a symmetrical axis connecting an upstream side and a downstream side of the cooling flow path, as a unit shape, and a plurality of the unit shapes are arranged in directions orthogonal to the symmetrical axis.

According to a third aspect of the disclosure, in the third aspect, the first flow path walls and the second flow path walls are formed in a wave form having the same width, and are arranged at intervals equal to the width in the symmetrical axis direction.

According to a fourth aspect of the disclosure, in the fourth aspect, the width of a connection opening at the connection location between the first flow path and the second flow path is narrower than each of the widths of the first flow path and the second flow path.

According to a fifth aspect of the disclosure, in any one of the first aspect to the fifth aspect, the first collision surfaces or the second collision surfaces are provided at all connection locations between the first flow paths and the second flow paths.

### Advantageous Effects of Disclosure

According to the disclosure, if the cooling gas flowing through the first flow paths collides with the collision surfaces (first collision surfaces) of the first flow path walls, the cooling gas flows into the second flow paths and impinge cools the second member. In addition, if the cooling gas flowing through the second flow paths collides with the collision surfaces (second collision surfaces) of the second flow path walls, the cooling gas flows into the first flow paths and impinge cools the first member. Therefore, according to the disclosure, it is possible to impinge cool the first member and the second member without providing the partition plates disclosed in Patent Document 1, and it is possible to increase the cooling effectiveness.

In addition, according to the disclosure, since the partition plates are not required, it is possible to increase the strength of a core which is used when a product applied by the disclosure is cast.

That is, according to the disclosure, it is possible to prevent the core from being formed in a comb shape, and it is possible to enhance the manufacturability of the product applied by the disclosure.

Therefore, according to the disclosure, it is possible to increase the cooling effectiveness of the impingement cooling, and it is possible to enhance the manufacturability of the product applied by the disclosure.

### Brief Description of Drawings

FIG. 1A is a perspective view of a turbine blade including a cooling promoting structure which is an embodiment of the disclosure.
FIG. 1B is a sectional view taken along A-A of FIG. 1A.
FIG. 2A is a perspective view of a portion of the cooling promoting structure which is an embodiment of the disclosure.
FIG. 2B is an enlarged view of a portion of FIG. 2A.
FIG. 3 is an exploded perspective view of the cooling promoting structure which is an embodiment of the disclosure.
FIG. 4A is a plan view of a portion of the cooling promoting structure which is an embodiment of the disclosure.
FIG. 4B is a section view of the cooling promoting structure which is an embodiment of the disclosure.
FIG. 5A is a plan view of a portion of a core which is used when the turbine blade is cast.
FIG. 5B is a sectional view of the core which is used when the turbine blade is cast.
FIG. 6A is a plan view of a portion of a modification example of the cooling promoting structure which is an embodiment of the disclosure.
FIG. 6B is a sectional view of the modification example of the cooling promoting structure which is an embodiment of the disclosure.
FIG. 7 is a perspective view of another modification example of the cooling promoting structure which is an embodiment of the disclosure.
FIG. 8 is a perspective view of still another modification example of the cooling promoting structure which is an embodiment of the disclosure.
FIG. 9 is a perspective view of still another modification example of the cooling promoting structure which is an embodiment of the disclosure.

### Description of Embodiments

Hereinafter, with reference to the drawings, an embodiment of a cooling promoting structure according to the disclosure will be described. Moreover, in descriptions below, a turbine blade into which the cooling promoting structure of the disclosure is incorporated will be described. In addition, in the following drawings, in order to show each member so as to be recognizable, the scale of each member is appropriately changed.

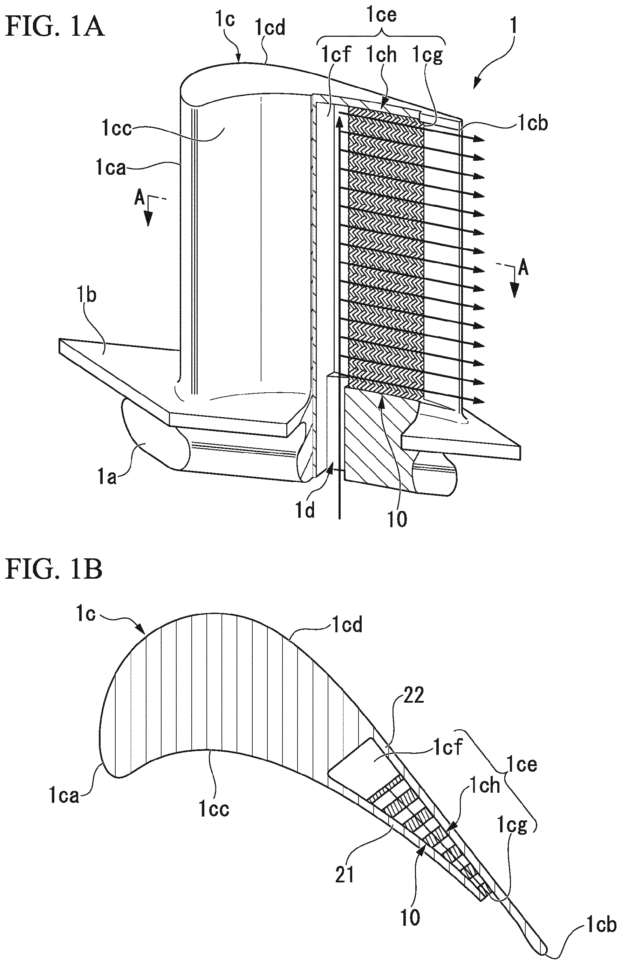

FIG. 1A is a perspective view of a turbine blade 1 including a cooling promoting structure 10 of the present embodiment. FIG. 1B is a sectional view taken along A-A of FIG. 1A. Moreover, in FIG. 1A, in order to show the cooling promoting structure 10 of the present embodiment so as to be recognizable, a portion of a pressure surface of the turbine blade 1 is cut and shown.

In the present embodiment, the turbine blade 1 is a rotor blade of a turbine which is mounted on a jet engine. The turbine blade 1 includes a dovetail 1a which is inserted into a disk (rotary body), a platform 1b which is formed on the dovetail 1a, and a blade portion 1c which is formed on the platform 1b.

As shown in FIG. 1B, the blade portion 1c is an airfoil portion in which the sectional shape includes a leading edge 1ca, a trailing edge 1cb, a pressure surface 1cc, and a suction surface 1cd, and includes a cooling flow path Ice in the inner portion close to the trailing edge 1cb. In addition, the cooling flow path Ice includes a cooling air introduction portion 1cf formed by the leading edge 1ca, an opening end 1cg formed by the trailing edge 1cb, and an intermediate portion 1ch which connects the cooling air introduction portion 1cf and the opening end 1cg to each other.

The cooling air introduction portion 1cf is provided to linearly extend from the lower end portion to the upper end portion of the blade portion 1c in the height direction (up-down direction in FIG. 1A), and a through hole 1d penetrating the dovetail 1a and the platform 1b in the height direction of the blade portion 1c is connected to the lower end of the cooling air introduction portion 1cf. The opening end 1cg is provided to be slightly close to the leading edge 1ca further from the trailing edge 1cb, and is open toward the trailing edge 1cb. The opening end 1cg also is provided to linearly extend from the lower end portion to the upper end portion of the blade portion 1c in the up-down direction in the height direction. The height of the intermediate portion 1 ch is the same as the heights of the cooling air introduction portion 1cf and the opening end 1cg.

In the cooling flow path 1ce, first, cooling air X supplied via the through hole 1d flows into the cooling air introduction portion 1cf, and the cooling air X supplied to the cooling air introduction portion 1cf is ejected toward the trailing edge 1cb from the opening end 1cg via the intermediate portion 1ch. That is, the cooling air X flows from the leading edge 1ca side toward the trailing edge 1cb through the cooling flow path Ice which is formed inside the blade portion 1c. When the cooling air X flows through the cooling flow path 1ce, the cooling air X absorbs heat from the blade portion 1c and cools the blade portion 1c. In addition, after the cooling air X is ejected from the opening end 1cg, the cooling air X flows along the pressure surface 1cc of the blade portion 1c. Accordingly, the blade portion 1c is film cooled up to the trailing edge 1cb.

In addition, as shown in FIG. 1B, in the portion in which the cooling flow path Ice is formed, a blade wall of the pressure surface 1cc and a blade wall of the suction surface 1cd are disposed to face each other in a state where the cooling flow path Ice is interposed therebetween. That is, the cooling flow path Ice is formed between the blade wall of the pressure surface 1cc and the blade wall of the suction surface 1cd which are disposed to face each other. Hereinafter, the blade wall of the pressure surface 1cc is referred to as a pressure surface blade wall 21 (first member), and the blade wall of the suction surface 1cd is referred to as a suction surface blade wall 22 (second member).

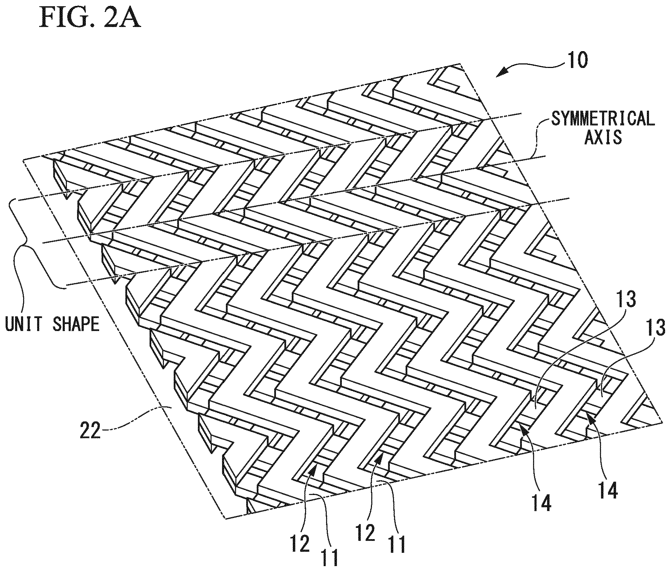

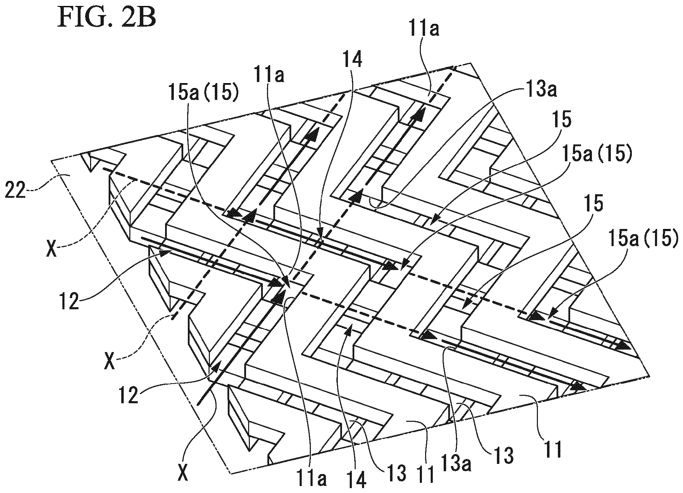

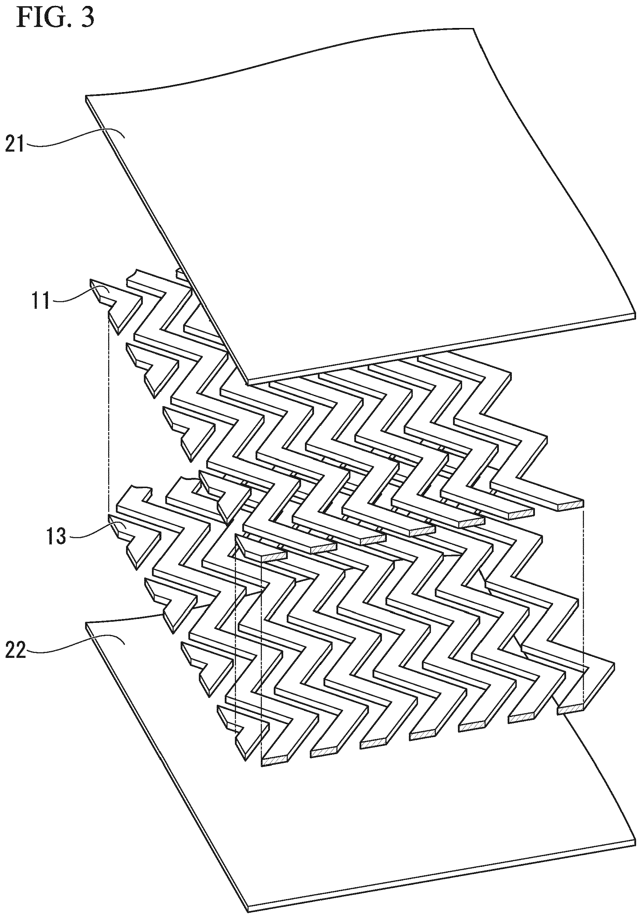

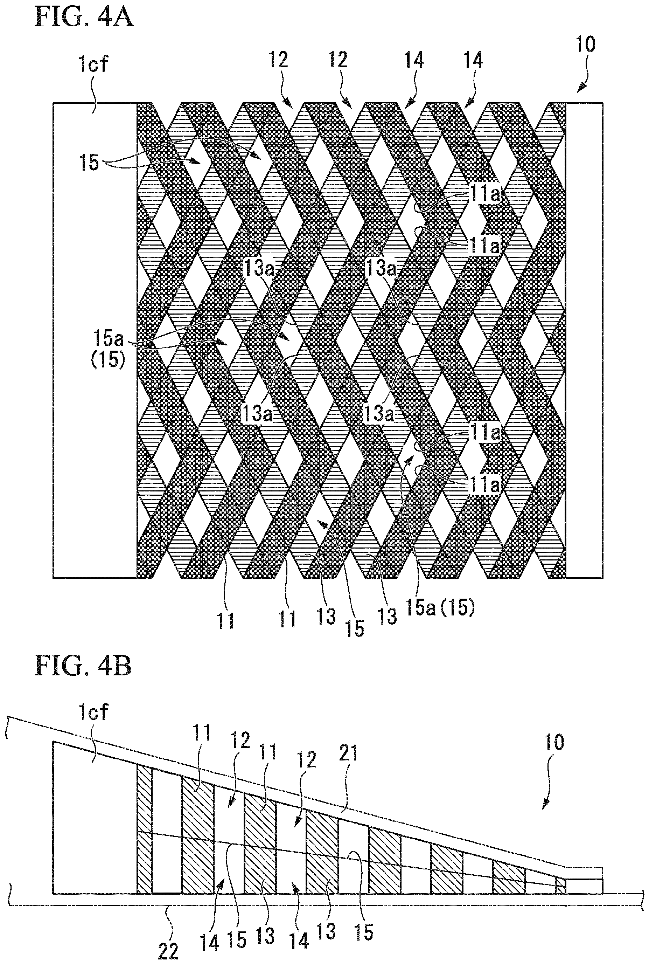

The cooling promoting structure 10 of the present embodiment is provided in the intermediate portion 1ch of the cooling flow path 1ce, and is interposed between the pressure surface blade wall 21 and the suction surface blade wall 22. FIG. 2A is a perspective view showing a portion of the cooling promoting structure 10, and FIG. 2B is a perspective view in which a portion of the FIG. 2A is further enlarged. FIG. 3 is an exploded perspective view of the cooling promoting structure 10. FIG. 4A is a plan view showing a portion of the cooling promoting structure 10, and FIG. 4B is a sectional view of the cooling promoting structure 10. In FIG. 4A, for easy viewing, hatching portions different from each other are assigned to first flow path walls 11 and second flow path walls 13 which are described below.

As shown in the drawings, the cooling promoting structure 10 of the present embodiment includes the first flow path walls 11, first flow paths 12, the second flow path walls 13, and second flow paths 14. Each of the first flow path walls 11 is erected from the pressure surface blade wall 21 toward the suction surface blade wall 22, and is a wall portion having an approximately rectangular section.

As shown in FIGS. 2A and 4A, each of the first flow path walls 11 is formed in a wave form in which bending is repeated at a constant period. In addition, the plurality of first flow path walls 11 are arranged in a front-rear direction of the blade portion 1c at equal intervals.

A portion of a side surface of each of the first flow path walls 11 is a first collision surface 11a on which the cooling air X flowing through the first flow path 12 collides with the first flow path wall 11. The first collision surface 11a is a connection location between the first flow path 12 and the second flow path 14, and is provided at the location (location at which the first flow path 12 is bent) at which the cooling air X flows from the first flow path 12 into the second flow path 14.

As described above, the first flow paths 12 are flow paths which are formed by the plurality of first flow path walls 11 arranged at equal intervals, and are formed of gaps between the first flow path walls 11. Since the first flow paths 12 are formed of the gaps between the first flow path walls 11, similar to the first flow path walls 11, each of the first flow paths 12 is formed in a wave form in which bending is repeated at a constant period. The first flow path 12 is provided so as to be close to the pressure surface blade wall 21 in a space (that is, cooling flow path Ice) interposed between the pressure surface blade wall 21 and the suction surface blade wall 22.

Each of the second flow path walls 13 is erected from the suction surface blade wall 22 toward the pressure surface blade wall 21, and similarly to the first flow path wall 11, is a wall portion having a rectangular section. As shown in FIGS. 2A or 4A, each of the second flow path walls 13 is formed in a wave form in which bending is repeated at a constant period. In addition, a period of the wave form formed by the second flow path walls 13 is the same as a period of the wave form formed by the first flow path walls 11, and a phase of the wave form formed by the second flow path walls 13 is shifted 180° to a phase of the wave form formed by the first flow path wall 11. In addition, the plurality of second flow path walls 13 are arranged at equal intervals in the front-rear direction of the blade portion 1c. Moreover, the distance in the plate thickness direction from the suction surface blade wall 22 to the pressure surface blade wall 21 side surface of the second flow path wall 13 is the same as the distance in the plate thickness from the pressure surface blade wall 21 to the suction surface blade wall 22 side surface of the first flow path wall 11. That is, the distance in the thickness direction of the first flow path wall 11 from the pressure surface blade wall 21 is set so as to be the same as the distance in the thickness direction of the second flow path wall 13 from the suction surface blade wall 22 so that a boundary surface between the first flow path wall 11 and the second flow path wall 13 becomes a flat surface except for the connection location between the first flow path 12 and the second flow path 14.

A portion of a side surface of each of the second flow path walls 13 is a second collision surface 13a on which the cooling air X flowing through the second flow path 14 collides with the second flow path wall 13. The second collision surface 13a is the connection location between the first flow path 12 and the second flow path 14, and is provided at the location (location at which the second flow path 14 is bent) at which the cooling air X flows from the second flow path 14 into the first flow path 12.

As described above, the second flow paths 14 are flow paths which are formed by the plurality of second flow path walls 13 arranged at equal intervals, and are formed of gaps between the second flow path walls 13. Since the second flow paths 14 are formed of the gaps between the second flow path walls 13, similar to the second flow path walls 13, each of the second flow paths 14 is formed in a wave form in which bending is repeated at a constant period. The second flow path 14 is provided so as to be close to the suction surface blade wall 22 in the space (that is, cooling flow path Ice) interposed between the pressure surface blade wall 21 and the suction surface blade wall 22.

As shown in FIG. 4A, the first flow paths 12 and the second flow paths 14 are disposed so as to overlap with each other at a plurality of locations when viewed from an approximately normal direction of the pressure surface 1cc or the suction surface 1cd. The first flow paths 12 and the second flow path 14 are connected to each other at the portions at which the first flow paths 12 and the second flow path 14 overlap with each other, and as a result, openings 15 are formed. All the first flow paths 12 and second flow paths 14 communicate with each other via the openings 15. Among the openings 15, the openings 15 which are provided at bent portions of the first flow paths 12 and the second flow paths 14 function as inflow openings 15a (connection openings) through which the cooling air X flows from the first flow paths 12 into the second flow paths 14 or flows from the second flow paths 14 into the first flow paths 12. In addition, the first flow paths 12 and the second flow paths 14 are disposed so as to completely overlap each other over the entire region of the widths of the flow paths (the widths of the first flow paths 12 and the widths of the second flow paths 14) in the inflow openings 15a. That is, the width of each of the inflow openings 15a is the same as the width of the first flow path 12 and the width of the second flow path 14.

As shown in FIGS. 2A, the first flow path walls 11, the first flow paths 12, the second flow path walls 13, and the second flow paths 14 are formed in wave forms which are bent at a constant period. The cooling promoting structure 10 including the first flow path walls 11, the first flow paths 12, the second flow path walls 13, and the second flow paths 14 has a mirror symmetrical shape having a center about a symmetrical axis connecting an upstream side and a downstream side of the cooling flow path 1ce, as a unit shape, and a plurality of the unit shapes are arranged in directions orthogonal to the symmetrical axis.

Each of the first flow path walls 11 and the second flow path walls 13 is formed in a wave form having the same width, and the first flow path walls and the second flow path walls are arranged at intervals equal to the width in the symmetrical axis direction.

As described above, the cooling promoting structure 10 of the present embodiment includes the plurality of first flow path walls 11 which are erected on the pressure surface blade wall 21 and form the first flow paths 12 on the pressure surface blade wall 21, and the plurality of second flow path walls 13 which are erected on the suction surface blade wall 22 and form the second flow paths 14 on the suction surface blade wall 22. In addition, the first flow path walls 11 include the first collision surfaces 11a which collide with the cooling gas X flowing through the first flow paths 12, and the second flow path walls 13 includes the second collision surfaces 13a which collide with the cooling gas X flowing through the second flow paths 14. The first flow paths 12 and the second flow paths 14 are connected to each other via the inflow openings 15a at the disposition locations of the first collision surfaces 11a and the second collision surfaces 13a.

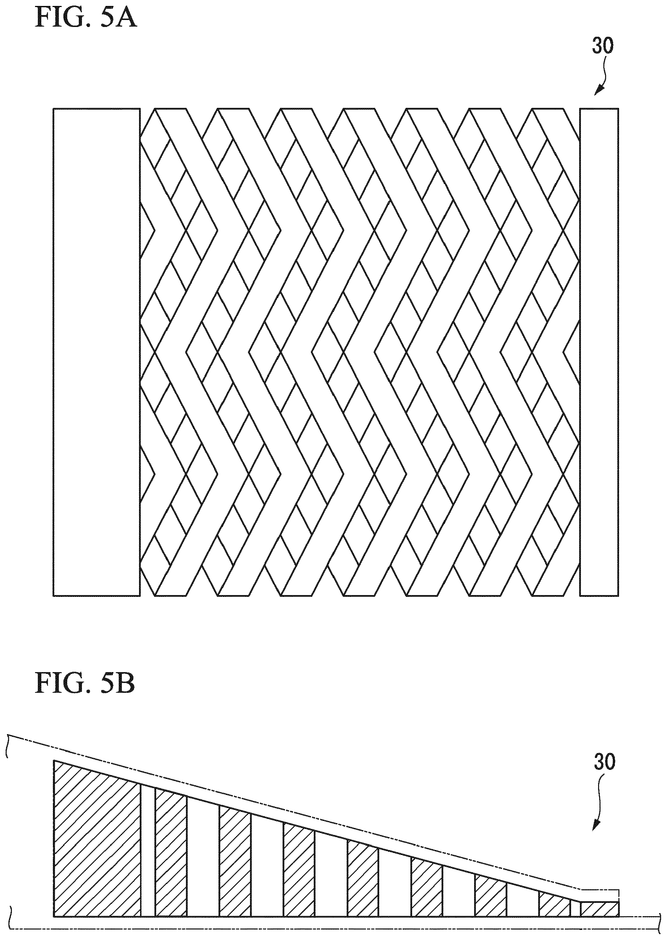

FIG. 5A is a plan view of a portion of a core 30 which is used when the turbine blade 1 is cast. FIG. 5B is a sectional view of the core 30. The core 30 is a ceramic member which is disposed inside a mold to form the cooling promoting structure 10 of the present embodiment when the turbine blade 1 is cast. In the core 30, portions corresponding to the first flow path walls 11 and the second flow path walls 13 are hollow, and portions corresponding to the first flow paths 12 and the second flow paths 14 are solid. The cooling promoting structure 10 of the present embodiment does not include partition plates by which the cooling flow path 1ce is divided in the height direction of the turbine blade 1. Accordingly, the core 30 is not formed in a comb shape without need for hollow portions corresponding to the partition plates.

Next, effects of the cooling promoting structure 10 of the present embodiment having the above-described configuration will be described.

If the cooling air X is supplied to the through hole 1d of the turbine blade 1, the cooling air X is supplied to the cooling promoting structure 10 via the cooling air introduction portion 1cf. The cooling air X supplied to the cooling promoting structure 10 is distributed into the first flow paths 12 and the second flow paths 14 at the inlet (the end portion of the leading edge 1ca side) of the cooling promoting structure 10.

As shown by solid arrows in FIG. 2B, the cooling air X distributed into the first flow paths 12 flows through the first flow paths 12 along the first flow path walls 11, and collides with the first collision surfaces 11a orthogonal to the flow directions at the locations at which the first flow path walls 11 are bent. The cooling air X colliding with the first collision surfaces 11a flows into the second flow paths 14 via the inflow openings 15a. In this case, the cooling air X collides with the suction surface blade wall 22 and impinge cools the suction surface blade wall 22. As shown by broken lines in FIG. 2B, the cooling air X colliding with the suction surface blade wall 22 flows through the second flow paths 14 along the second flow path walls 13 and collides with the second collision surfaces 13a orthogonal to the flow directions at the locations at which the second flow path walls 13 are bent. The cooling air X colliding with the second collision surface 13a flows into the first flow paths 12 again via the inflow openings 15a. In this case, the cooling air X collides with the pressure surface blade wall 21 and impinge cools the pressure surface blade wall 21.

As shown by the broken arrows in FIG. 2B, the cooling air X distributed into the second flow paths 14 flows through the second flow paths 14 along the second flow path walls 13, and collides with the second collision surfaces 13a orthogonal to the flow directions at the locations at which the second flow path walls 13 are bent. The cooling air X colliding with the second collision surfaces 13a flows into the first flow paths 12 via the inflow openings 15a. In this case, the cooling air X collides with the pressure surface blade wall 21 and impinge cools the pressure surface blade wall 21. As shown by the solid lines in FIG. 2B, the cooling air X colliding with the pressure surface blade wall 21 flows through the first flow paths 12 along the first flow path walls 11 and collides with the first collision surfaces 11a orthogonal to the flow directions at the locations at which the first flow path walls 11 are bent. The cooling air X colliding with the first collision surface 11a flows into the second flow paths 14 again via the inflow openings 15a. In this case, the cooling air X collides with the suction surface blade wall 22 and impinge cools the suction surface blade wall 22.

In this way, the cooling air X distributed into the first flow paths 12 and the second flow paths 14 collides with the first collision surfaces 11a or the second collision surfaces 13a. Accordingly, whenever the flow path of the cooling air X is changed, the cooling air X impinge cools the pressure surface blade wall 21 or the suction surface blade wall 22. In addition, the cooling air X discharged from the cooling promoting structure 10 is ejected to the outside of the turbine blade 1 via the opening end 1cg and film-cools the vicinity of the trailing edge 1cb.

According to the cooling promoting structure 10 of the present embodiment, even when the partition plates dividing the inner portion of the cooling flow path 1ce in the height direction of the blade are not provided, it is possible to impinge cool the pressure surface blade wall 21 and the suction surface blade wall 22, and it is possible to increase the cooling effectiveness. In addition, according to the cooling promoting structure 10 of the present embodiment, since the partition plates are not required, it is possible to prevent the shape of the core 30 from being formed in a comb shape, and it is possible to increase the strength of the core 30. Accordingly, it is possible to enhance the manufacturability of the turbine blade 1. Therefore, according to the cooling promoting structure 10 of the present embodiment, it is possible to increase the cooling the effectiveness of the impingement cooling, and it is possible to enhance the manufacturability of the turbine blade 1.

In addition, since the partition plates are not required, it is possible to allow the cooling air X to flow the entire cooling flow path 1ce, and it is possible to more uniformly cool the pressure surface blade wall 21 and the suction surface blade wall 22. Moreover, since the partition plates are not required, it is possible to decrease the weight of the cooling promoting structure 10, and it is possible to decrease the weight of the turbine blade 1.

Moreover, in the cooling promoting structure 10 of the present embodiment, all the first flow paths 12 and second flow paths 14 communicate with each other via the openings 15. In the core 30 which is configured to form the cooling promoting structure 10, since all solid portions are connected to each other, the strength of the core 30 increases. Accordingly, it is possible to enhance the manufacturability of the turbine blade 1.

In addition, in the cooling promoting structure 10 of the present embodiment, the first flow path walls 11, the second flow path walls 13, the first flow paths 12, and the second flow paths 14 have the mirror symmetrical shape, which has a center about a symmetrical axis connecting the upstream side and the downstream side of the cooling flow path 1ce, as the unit shape, and a plurality of the unit shapes are arranged in directions orthogonal to the symmetrical axis. According to the cooling promoting structure 10 having the shape, since the shapes in the directions orthogonal to the symmetrical axis are repeated patterns of the unit shapes, it is possible to simplify the shape of the core 30 and to easily mold the core 30.

In addition, in the cooling promoting structure 10 of the present embodiment, each of the first flow path walls 11 and the second flow path walls 13 is formed in a wave form having the same width, and the first flow path walls and the second flow path walls are arranged at intervals equal to the width in the symmetrical axis direction. Therefore, according to the cooling promoting structure 10 having the shape, since the shape in the symmetrical axis direction is a repeated pattern, it is possible to simplify the shape of the core 30 and to easily mold the core 30.

Hereinbefore, a preferred embodiment of the disclosure is described with reference to the accompanying drawings. However, the disclosure is not limited to the embodiment. The shapes, combinations, or the like of the components shown in the embodiment are examples, and various modifications may be applied based on design request or the like within the scope of the disclosure.

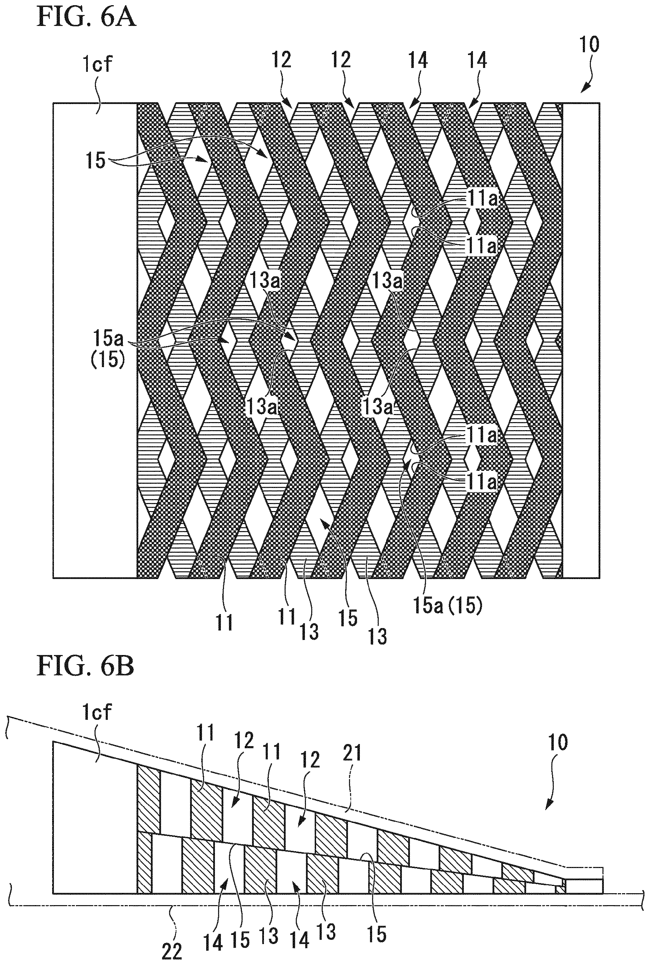

FIG. 6A is a plan view of a portion of a modification example of the cooling promoting structure 10 of the embodiment. FIG. 6B is a sectional view of the modification example of the cooling promoting structure 10. As shown in FIGS. 6A and 6B, in the modification example, by decreasing amplitudes of the shapes of the first flow path walls 11 and the second flow path walls 13 in the plan view, the width of each of the inflow openings 15a is narrower than the width of each of the first flow paths 12 and the second flow paths 14. In this way, in the modification example, since the width of the inflow opening 15a is narrower than the width of inflow opening 15a of the above-described first embodiment, flow velocity of the cooling air X passing through the inflow openings 15a increases, and it is possible to further increase the effects of the impingement cooling.

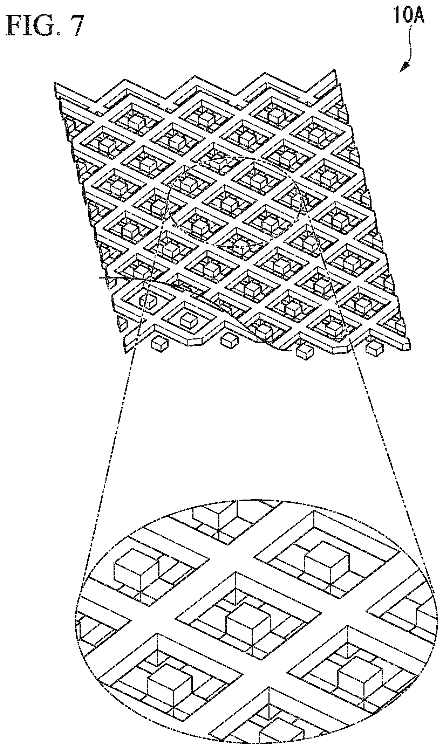

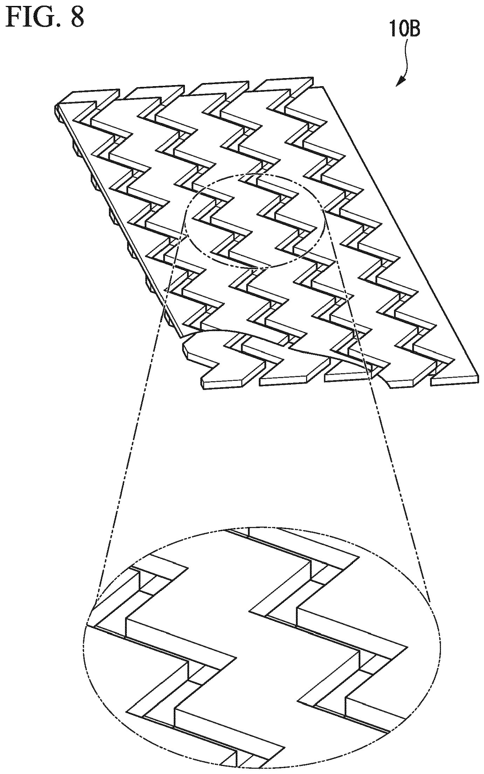

Moreover, the shapes of the first flow path walls 11 and the second flow path walls 13 are not limited to the embodiment. For example, as shown in FIG. 7, the shapes of the first flow path walls and the second flow path walls are respectively configured of lattice portions and block portions disposed at the centers of the lattice portions, and the first flow path walls and the second flow path walls may be disposed so as to be shifted from each other. In addition, as shown in FIG. 8, the first flow path walls and the second flow path walls having wide widths may be disposed. Also in this configuration, the first flow path walls can include the first collision surfaces which collide with the cooling air flowing through the first flow paths, and the second flow path walls can include the second collision surfaces which collide with the cooling air flowing through the second flow paths.

In addition, in a state where an arrangement pitch of the first flow path walls 11 and an arrangement pitch of the second flow path walls 13 are maintained, it is possible to change the width of the inflow openings 15a by changing a bending angle of the first flow path wall 11 and a bending angle of the second flow path wall 13. For example, by increasing the bending angles, it is possible to decrease overlapping portions between the first flow paths 12 and the second flow paths 14, and it is possible to decrease the widths of the inflow openings 15a.

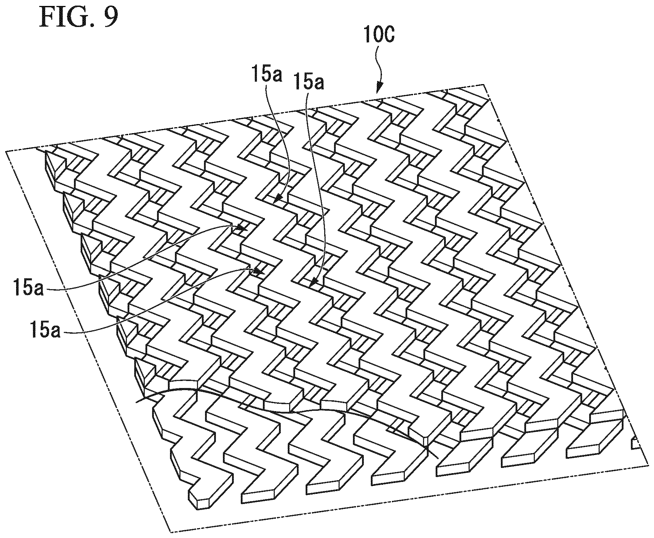

Moreover, as shown in FIG. 9, by adjusting repetition periods, widths, or the like of the first flow path walls 11 and the second flow path walls 13, a cooling promoting structure 10C in which all openings 15 are the inflow openings 15a may be adopted. That is, the first collision surfaces 11a or the second collision surfaces 13a are provided on all the connection locations between the first flow paths 12 and the second flow paths 14. Accordingly, it is possible to remove openings 15 which are not the inflow openings. Therefore, the number of inflow openings 15a per unit wall area of the blade increases, and it is possible to further increase the cooling promotion effectiveness.

In addition, in the above-described embodiments, the configuration in which the cooling promoting structure of the disclosure is applied to the turbine blade 1 is described. However, the disclosure is not limited to this, and for example, the disclosure may be applied to a platform or a combustor liner.

Moreover, in the above-described embodiments, the configuration in which air is used as the cooling gas is described. However, the disclosure is not limited to this, and other gas may be used as the cooling gas.

### Industrial Applicability

According to the cooling promoting structure of the disclosure, it is possible to increase the cooling effectiveness of impingement cooling, and it is possible to enhance the manufacturability of a product where the cooling promoting structure is used.

While preferred embodiments of the disclosure have been described and shown above, it should be understood that these are exemplary examples of the disclosure and are not to be considered as limiting. Additions, omissions, substitutions, and other modifications can be made without departing from the scope of the disclosure. Accordingly, the disclosure is not to be considered as being limited by the foregoing description, and is only limited by the scope of the appended claims.

### Reference Signs List

1: turbine blade, 1a: dovetail, 1b: platform, 1c: blade portion, 1ca: leading edge, 1cb: trailing edge, 1cc: pressure surface, 1cd: suction surface, 1ce: cooling flow path, 1cf: cooling air introduction portion, 1cg: opening end, 1ch: intermediate portion, 1d: through hole, 10: cooling promoting structure, 11: first flow path wall, 11a: first collision surface, 12: first flow path, 13: second flow path wall, 13a: second collision surface, 14: second flow path, 15: opening, 15a: inflow opening (connection opening), 21: pressure surface blade wall (first member), 22: suction surface blade wall (second member), 30: core, X: cooling air (cooling gas)

## Claims

1. A cooling promoting structure (10) for a gas turbine component which is provided in a cooling flow path (1ce) which is formed between a first member (21) and a second member (22) disposed to face each other, comprising:
a plurality of first flow path walls (11) which are erected on the first member (21) at equal intervals in a front-rear direction of the first member (21) and form first flow paths (12) on the first member (21) side of the cooling flow path (Ice); and
a plurality of second flow path walls (13) which are erected on the second member (22) at equal intervals in a front-rear direction of the second member (22) and form second flow paths (14) on the second member (22) side of the cooling flow path (Ice), and **characterised in that** each of the first flow path walls (11) includes a first collision surface (11a) which collides with cooling gas (X) flowing through the first flow path (12) at locations where the first flow path (12) is bent and at which the cooling air (X) flows from the first flow path (12) into the second flow path (14), and
each of the second flow path walls (13) includes a second collision surface (13a) which collides with cooling gas (X) flowing through the second flow path (14) at locations where the second flow path (14) is bent and at which the cooling air (X) flows from the second flow path (14) into the first flow path (12),
the distance in the thickness direction of the first flow path wall (11) of the first collision surface (11a) from the first member (21) is set so as to be the same as the distance in the thickness direction of the second flow path wall (13) of the second collision surface (13a) from the second member (22) such that a boundary surface between the first flow path wall (11) and the second flow path wall (13) becomes a flat surface except for the connection location between the first flow path (12) and the second flow path (14),
each of the first flow path walls (11) is formed in a wave form in which bending is repeated at a constant period,
each of the second flow path walls (13) is formed in a wave form in which bending is repeated at the same constant period of the wave form formed by the first flow path walls (11), and
a phase of the wave form formed by the second flow path walls (13) is shifted 180° to a phase of the wave form formed by the first flow path wall (11).

2. The cooling promoting structure (10) according to claim 1,
wherein the first flow path wall (11), the second flow path wall (13), the first flow path (12), and the second flow path (14) have a mirror symmetrical shape having a center about a symmetrical axis connecting an upstream side and a downstream side of the cooling flow path (Ice), as a unit shape, and a plurality of the unit shapes are arranged in directions orthogonal to the symmetrical axis.

3. The cooling promoting structure (10) according to claim 2,
wherein the first flow path walls (11) and the second flow path walls (13) are formed in a wave form having the same width, and are arranged at intervals equal to the width in the symmetrical axis direction.

4. The cooling promoting structure (10) according to claim 3,
wherein a width of a connection opening (15a) at the connection location between the first flow path (12) and the second flow path (14) is narrower than each of the widths of the first flow path (12) and the second flow path (14).

5. The cooling promoting structure (10) according to any one of claims 1 to 4,
wherein the first collision surfaces (11a) or the second collision surfaces (13a) is provided at all connection locations between the first flow paths (12) and the second flow paths (14).

## Patentansprüche

1. Kühlungsförderungsstruktur (10) für eine Gasturbinenkomponente, welche in einem Kühlungsströmungsweg (1ce) bereitgestellt ist, welcher zwischen einem ersten Element (21) und einem zweiten Element (22) gebildet ist, welche angeordnet sind, um einander zugewandt zu sein, Folgendes beinhaltend:
eine Vielzahl von ersten Strömungswegwänden (11), welche am ersten Element (21) in gleichen Abständen in einer Vorwärts-Rückwärts-Richtung des ersten Elements (21) errichtet sind und erste Strömungswege (12) an der Seite des ersten Elements (21) das Kühlungsströmungswegs (1ce) bilden; und
eine Vielzahl von zweiten Strömungswegwänden (13), welche am zweiten Element (22) in gleichen Abständen in einer Vorwärts-Rückwärts-Richtung des zweiten Elements (22) errichtet sind und zweite Strömungswege (14) an der Seite des zweiten Elements (22) das Kühlungsströmungswegs (1ce) bilden,
und **dadurch gekennzeichnet, dass**
jede der ersten Strömungswegwände (11) eine erste Kollisionsoberfläche (11a) enthält, welche mit Kühlgas (X) kollidiert, welches durch den ersten Strömungsweg (12) strömt, an Positionen, an denen der erste Strömungsweg (12) gebogen ist und an welchen die Kühlluft (X) vom ersten Strömungsweg (12) in den zweiten Strömungsweg (14) strömt, und
jede der zweiten Strömungswegwände (13) eine zweite Kollisionsoberfläche (13a) enthält, welche mit Kühlgas (X) kollidiert, welches durch den zweiten Strömungsweg (14) strömt, an Positionen, an denen der zweite Strömungsweg (14) gebogen ist und an welchen die Kühlluft (X) vom zweiten Strömungsweg (14) in den ersten Strömungsweg (12) strömt,
wobei der Abstand in der Dickenrichtung der ersten Strömungswegwand (11) der ersten Kollisionsoberfläche (11a) vom ersten Element (21) so festgelegt ist, dass er derselbe wie der Abstand in der Dickenrichtung der zweiten Strömungswegwand (13) der zweiten Kollisionsoberfläche (13a) vom zweiten Element (22) in einer Weise ist, dass eine Grenzoberfläche zwischen der ersten Strömungswegwand (11) und der zweiten Strömungswegwand (13) eine flache Oberfläche wird, mit Ausnahme der Anschlussposition zwischen dem ersten Strömungsweg (12) und dem zweiten Strömungsweg (14),
wobei jede der ersten Strömungswegwände (11) in einer Wellenform gebildet ist, in welcher Biegeschritte mit einer konstanten Periode wiederholt werden,
wobei jede der zweiten Strömungswegwände (13) in einer Wellenform gebildet ist, in welcher Biegeschritte mit derselben konstanten Periode wie bei derjenigen Wellenform, welche durch die ersten Strömungswegwände (11) gebildet wird, wiederholt werden, und
wobei eine Phase der Wellenform, welche durch die zweiten Strömungswegwände (13) gebildet wird, um 180° zu einer Phase derjenigen Wellenform versetzt ist, welche durch die erste Strömungswegwand (11) gebildet wird.

2. Kühlungsförderungsstruktur (10) nach Anspruch 1,
bei welcher die erste Strömungswegwand (11), die zweite Strömungswegwand (13), der erste Strömungsweg (12) und der zweite Strömungsweg (14) eine spiegelsymmetrische Form besitzen, welche einen Mittelpunkt um eine Symmetrieachse besitzen, welche eine vorgelagerte Seite und eine nachgelagerte Seite des Kühlungsströmungswegs (1ce) verbinden, als eine Einheitsform, und eine Vielzahl von Einheitsformen in zur Symmetrieachse rechtwinkligen Richtungen angeordnet ist.

3. Kühlungsförderungsstruktur (10) nach Anspruch 2,
bei welcher die ersten Strömungswegwände (11) und die zweiten Strömungswegwände (13) in einer Wellenform gebildet sind, welche dieselbe Breite besitzt, und in Abständen angeordnet sind, welche der Breite in der Richtung der Symmetrieachse entsprechen.

4. Kühlungsförderungsstruktur (10) nach Anspruch 3,
bei welcher eine Breite einer Anschlussöffnung (15a) an der Anschlussposition zwischen dem ersten Strömungsweg (12) und dem zweiten Strömungsweg (14) schmaler als jede der Breiten des ersten Strömungswegs (12) und des zweiten Strömungsweg (14) ist.

5. Kühlungsförderungsstruktur (10) nach einem der Ansprüche 1 bis 4,
bei welcher die ersten Kollisionsoberflächen (11a) oder die zweiten Kollisionsoberflächen (13a) an allen Anschlusspositionen zwischen den ersten Strömungswegen (12) und den zweiten Strömungswegen (14) bereitgestellt sind.

## Revendications

1. Structure favorisant le refroidissement (10) pour un composant de turbine à gaz qui est fourni dans un chemin d'écoulement de refroidissement (1ce) qui est formé entre un premier élément (21) et un second élément (22) disposés de façon à se faire face, comprenant :
une pluralité de premières parois de chemin d'écoulement (11) qui sont érigées sur le premier élément (21) à intervalles égaux dans une direction avant-arrière du premier élément (21) et forment de premiers chemins d'écoulement (12) sur le côté du premier élément (21) du chemin d'écoulement de refroidissement (1ce) ; et
une pluralité de secondes parois de chemin d'écoulement (13) qui sont érigées sur le second élément (22) à intervalles égaux dans une direction avant-arrière du second élément (22) et forment de seconds chemins d'écoulement (14) sur le côté du second élément (22) du chemin d'écoulement de refroidissent (1ce) ;
et **caractérisée en ce que**
chacune des premières parois de chemin d'écoulement (11) inclut une première surface de collision (11a) qui entre en collision avec un gaz de refroidissement (X) s'écoulant à travers le premier chemin d'écoulement (12) à des emplacements où le premier chemin d'écoulement (12) est plié et auquel l'air de refroidissement (X) s'écoule depuis le premier chemin d'écoulement (12) dans le second chemin d'écoulement (14), et
chacune des secondes parois de chemin d'écoulement (13) inclut une seconde surface de collision (13a) qui entre en collision avec un gaz de refroidissement (X) s'écoulant à travers le second chemin d'écoulement (14) à des emplacements où le second chemin d'écoulement (14) est plié et où l'air de refroidissement (X) s'écoule du second chemin d'écoulement (14) dans le premier chemin d'écoulement (12),
la distance dans le sens de l'épaisseur de la première paroi de chemin d'écoulement (11) de la première surface de collision (11a) à partir du premier élément (21) est réglée afin d'être la même que la distance dans le sens de l'épaisseur de la seconde paroi de chemin d'écoulement (13) de la seconde surface de collision (13a) à partir du second élément (22) de sorte qu'une surface limite entre la première paroi de chemin d'écoulement (11) et la seconde paroi de chemin d'écoulement (13) devienne une surface plane excepté pour l'emplacement de raccordement entre le premier chemin d'écoulement (12) et le second chemin d'écoulement (14),
chacune des premières parois de chemin d'écoulement (11) est réalisée en forme d'onde dans laquelle le pliage est répété à une période constante,
chacune des secondes parois de chemin d'écoulement (13) est réalisée en forme d'onde dans laquelle le pliage est répété à la même période constante que la forme d'onde réalisée par les premières parois de chemin d'écoulement (11), et
une phase de la forme d'onde réalisée par les secondes parois de chemin d'écoulement (13) est déplacée à 180° vers une phase de la forme d'onde réalisée par la première paroi de chemin d'écoulement (11).

2. Structure favorisant le refroidissement (10) selon la revendication 1,
dans laquelle la première paroi de chemin d'écoulement (11), la seconde paroi de chemin d'écoulement (13), le premier chemin d'écoulement (12) et le second chemin d'écoulement (14) présentent une forme symétrique en miroir présentant un centre autour d'un axe symétrique reliant un côté amont et un côté aval du chemin d'écoulement de refroidissement (1ce), comme une forme unitaire, et une pluralité de formes unitaires est agencée dans des directions perpendiculaires à l'axe symétrique.

3. Structure favorisant le refroidissement (10) selon la revendication 2,
dans laquelle les premières parois de chemin d'écoulement (11) et les seconds parois de chemin d'écoulement (13) sont réalisées en forme d'onde présentant la même largeur et sont agencées à intervalles égaux à la largeur dans la direction de l'axe symétrique.

4. Structure favorisant le refroidissement (10) selon la revendication 3,
dans laquelle une largeur d'une ouverture de raccordement (15a) à l'emplacement de raccordement entre le premier chemin d'écoulement (12) et le second chemin d'écoulement (14) est plus étroite que chacune des largeurs du premier chemin d'écoulement (12) et du second chemin d'écoulement (14).

5. Structure favorisant le refroidissement (10) selon l'une quelconque des revendications 1 à 4,
dans laquelle les premières surfaces de collision (11a) ou les secondes surfaces de collision (13a) sont fournies sur tous les emplacements de connexion entre les premiers chemins d'écoulement (12) et les seconds chemins d'écoulement (14).
